Europäisches Patentamt

European Patent Office

Office européen des brevets

(19)

(11) **EP 1 207 714 A1**

(12) **EUROPEAN PATENT APPLICATION**
published in accordance with Art. 158(3) EPC

(43) Date of publication:
22.05.2002 Bulletin 2002/21

(51) Int Cl.7: **H04Q 7/38**

(21) Application number: **01945746.4**

(86) International application number:
**PCT/JP01/05695**

(22) Date of filing: **02.07.2001**

(87) International publication number:
**WO 02/03739 (10.01.2002 Gazette 2002/02)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **03.07.2000 JP 2000201665**

(71) Applicant: **MATSUSHITA ELECTRIC INDUSTRIAL
CO., LTD.
Kadoma-shi, Osaka 571-8501 (JP)**

(72) Inventors:
• **HIRAMATSU, Katsuhiko
Yokosuka-shi, Kanagawa 238-0031 (JP)**
• **MIYOSHI, Kenichi
Yokohama-shi-Kanagawa 236-0058 (JP)**
• **AIZAWA, Junichi
Yokohama-shi, Kanagawa 240-0033 (JP)**

(74) Representative: **Grünecker, Kinkeldey,
Stockmair & Schwanhäusser Anwaltssozietät
Maximilianstrasse 58
80538 München (DE)**

(54) **COMMUNICATION TERMINAL DEVICE, AND BASE STATION DEVICE**

(57) The communication terminal apparatus according to the present invention includes a measuring section for measuring the reception quality of a control channel signal sent from a base station apparatus and a reception section for receiving a data channel signal sent by the base station apparatus according to a modulation system and coding system decided by the base station apparatus, and the above-described modulation system and coding system are decided by the base station apparatus based on the reception quality of the control channel signal measured by the measuring section and transmit power values of the control channel signal and data channel signal at the base station apparatus.

FIG.5

## Description

Technical Field

The present invention relates to a communication apparatus used in a digital mobile communication system, and more particularly, to a base station apparatus and communication terminal apparatus used for a W-CDMA (Wide band Code Division Multiple Access)-based digital mobile unit communication system.

Background Art

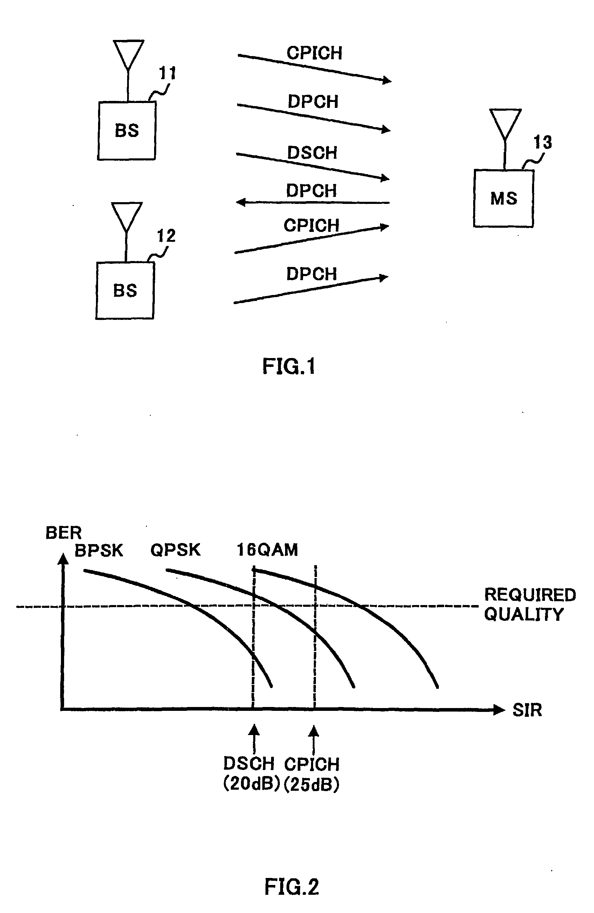

For a W-CDMA-based digital mobile communication system, high-speed data communication (downlink high-speed packet communication) using a downlink is being proposed in recent years. This high-speed data communication using the downlink will be explained with reference to FIG.1 below. FIG.1 is a schematic view showing a system carrying out a high-speed data communication using a downlink.

Suppose communication terminal apparatus 13 is located in an area covered by base station apparatus 11 and an area covered by base station apparatus 12 in Fig. 1. First, base station apparatus 11 sends a common known signal to the communication terminal apparatus located in the area covered by the own station using a common control channel (CPICH: Common PIlot CHannel). Likewise, base station apparatus 12 sends a common known signal to the communication terminal apparatus located in the area covered by the own station using CPICH.

Hereinafter, for simplicity of explanations, a signal communicated using CPICH will be referred to as "CPICH signal". Likewise, a signal communicated using downlink shared channel (DSCH: Downlink Shared CHannel) will be referred to as "DSCH signal" and a signal communicated using individual physical channel (DPCH: Dedicated Physical CHannel) will be referred to as "DPCH signal".

Communication terminal apparatus 13 measures the reception quality of a CPICH signal sent from base station apparatus 11 and a CPICH signal sent from base station apparatus 12. Then, of base station apparatuses 11 and 12, communication terminal apparatus 13 selects a base station apparatus (here, suppose base station apparatus 11) which sent a CPICH signal which could be received with good quality.

Hereinafter, communication terminal apparatus 13 decides a modulation system and error correcting coding system applicable to the DSCH signal based on the reception quality of the CPICH signal sent from base station apparatus 11 so that the reception quality of the DSCH signal at communication terminal apparatus 13 can meet the required quality. Communication terminal apparatus 13 sends the DPCH signal including information to notify a modulation system and error correcting coding system decided in this way and information to notify base station apparatus 11 as the request destination of the DSCH signal.

Not only communication terminal apparatus 13 but also other communication terminal apparatuses in the area covered by base station apparatus 11 and the area covered by base station apparatus 12 send DPCH signals according to the above-described procedure.

Base station apparatus 11 and base station apparatus 12 receive the DPCH signals sent from the communication terminal apparatuses including communication terminal apparatus 13 and thereby recognize the communication terminal apparatuses requesting the own stations for DSCH signals. Furthermore, base station apparatus 12 and base station apparatus 12 select a communication terminal apparatus with a good download (that is, DSCH) situation and good downlink service request (short delay time) from among the communication terminal apparatuses requesting the own stations to send DSCH signals based on the notified modulation system and error correcting coding system.

Hereafter, base station apparatus 11 and base station apparatus 12 send DSCH signals to the selected communication terminal apparatus using the modulation system and error correcting coding system notified from this communication terminal apparatus.

Thus, base station apparatus 11 and base station apparatus 12 can perform high-speed data communications with a communication terminal apparatus with a good downlink situation and a good service request.

When communication terminal apparatus 13 is located only in an area covered by one base station (e. g., suppose base station apparatus 11), communication terminal apparatus 13 decides a modulation system and error correcting coding system applicable to a DSCH signal based on the reception quality of the CPICH signal sent from base station apparatus 11. After this, communication terminal apparatus 13 sends a DPCH signal including information to notify the decided modulation system and error correcting coding system. Then, base station apparatus 11 performs processing similar to the above-described processing.

However, since the transmit power of the DSCH signal and the transmit power of the CPICH signal at the base station apparatus actually varies from one base station apparatus to another, high-speed data communication using the above-described conventional downlink has problems as shown below.

First, the communication terminal apparatus decides a modulation system and error correcting coding system that can be used for the DSCH signal based on the reception quality of the CPICH signal, but in the case where the transmit power of the DSCH signal is smaller than the transmit power of the CPICH signal at the base station apparatus, the communication terminal apparatus selects a system faster than the modulation system and error correcting coding system so that the reception quality of the DSCH signal meets the required quality. For this reason, the reception quality of the DSCH signal at the communication terminal apparatus may be inferior to the required quality.

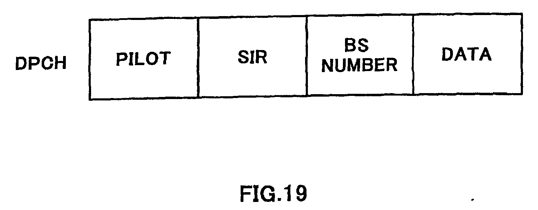

As a specific example, a case will be explained where as shown in FIG.19 the reception quality of the CPICH signal at the communication terminal apparatus is 25 [dB] and the reception quality of the DSCH signal at the communication terminal apparatus is 20 [dB] because the transmit power of the DSCH signal at the base station apparatus is smaller than the transmit power of the CPICH signal.

In this case, the communication terminal apparatus selects a QPSK modulation system as the modulation system to be used for the DSCH signal so that the reception quality of the DSCH signal satisfies the required quality based on the reception quality of the CPICH signal. However, the actual reception quality of DSCH is lower than the CPICH signal by 5 [dB], and therefore the reception quality of the DSCH signal using QPSK modulation falls below the required quality. For the communication terminal apparatus to receive the DSCH signal that satisfies the required quality, it is necessary to receive the DSCH signal using BPSK modulation.

on the contrary, when the transmit power of the DSCH signal at the base station apparatus is greater than the transmit power of the CPICH signal, the communication terminal apparatus selects a system slower than the modulation system and error correcting coding system so that the reception quality of the DSCH signal satisfies the required quality. For this reason, although the communication terminal apparatus can originally receive the DSCH signal according to the modulation system and error correcting coding system allowing high-speed data communications, the communication terminal apparatus actually receives the DSCH signal according to the modulation system and error correcting coding system decided based on the estimated reception quality of the CPICH signal.

As a specific example, a case will be explained where as shown in FIG.19 the reception quality of the CPICH signal at the communication terminal apparatus is 20 [dB] and the reception quality of the DSCH signal at the communication terminal apparatus is 25 [dB].

In this case, the communication terminal apparatus selects a BPSK modulation system as the modulation system to be used for the DSCH signal so that the reception quality of the DSCH signal satisfies the required quality based on the reception quality of the CPICH signal. However, the actual reception quality of the DSCH signal is higher than the CPICH signal by 5 [dB], and therefore the communication terminal apparatus can satisfy the required quality even if it receives the DSCH signal using QPSK modulation which is faster than BPSK modulation.

Second, when the communication terminal apparatus is located in an area covered by a plurality of base station apparatuses, the communication terminal apparatus selects a base station apparatus that has sent a CPICH signal having high reception quality at the communication terminal apparatus as the request destination of the DSCH signal, and therefore it may be impossible to correctly select a base station apparatus that will send the DSCH signal that can be received with the best quality depending on the transmit power of the DSCH signal and the transmit power of the CPICH signal at the above-described plurality of base station apparatuses.

More specifically, in FIG.1, suppose the transmit power of the DSCH signal is equal to the transmit power of the CPICH signal at base station apparatus 11, the transmit power of the DSCH signal is lower than the transmit power of the CPICH signal by 10 [dB] at base station apparatus 12, and the reception quality of the CPICH signal sent from base station apparatus 11 is 8 [dB] and the reception quality of the CPICH signal sent from base station apparatus 12 is 12 [dB] at communication terminal apparatus 13.

In this case, the conventional system would select base station apparatus 12 with better reception quality of the CPICH signal as the request destination of the DSCH signal. However, while the reception quality when base station apparatus 11 sends the DSCH signal is actually 8 [dB], the reception quality when base station apparatus 12 sends the DSCH signal is 2 [dB]. In this way, the communication terminal apparatus can only receive quality of 2 [dB], 6 [dB] lower than quality of 8 [dB] which would have been obtained if the communication terminal apparatus had originally received the DSCH signal from base station apparatus 11 with better quality.

As shown above, in high-speed data communications using a conventional downlink, the communication terminal apparatus cannot correctly estimate the reception quality of a DSCH signal sent from the base station apparatus, and therefore the communication terminal apparatus has a problem of being unable to receive the DSCH signal with the best quality (the base station apparatus cannot send the DSCH signal to be received by the communication terminal apparatus with the best quality).

Disclosure of Invention

It is an object of the present invention to provide a communication terminal apparatus capable of receiving a DSCH signal with the best quality and a base station apparatus capable of sending a DSCH signal to be received by the communication terminal apparatus with the best quality.

This object can be attained by deciding a modulation system and error correcting coding system to be used for data channel signals based on the reception quality at the communication terminal apparatus of a control channel signal sent from the base station apparatus and the transmit power value of a control channel signal and data channel signal at the above-described base station apparatus. An essential feature of the present invention is attained by selecting a base station apparatus which becomes the request destination for data channel signals from all base station apparatuses based on based on the reception quality at the communication terminal apparatus of a control channel signal sent from the base station apparatus and the transmit power values of a control channel signal and data channel signal at the above-described base station apparatus.

Brief Description of Drawings

FIG.1 is a schematic view showing an example of a radio communication between conventional base station apparatuses and communication terminal apparatus;
FIG.2 is a schematic view showing the reception quality of a DSCH signal and CPICH signal at the communication terminal apparatus;
FIG.3 is a schematic view showing an example of a radio communication between a base station apparatus and communication terminal apparatus according to Embodiment 1 of the present invention;
FIG.4 is a block diagram showing a configuration of the base station apparatus according to Embodiment 1 of the present invention;
FIG.5 is a block diagram showing a configuration of the communication terminal apparatus according to Embodiment 1 of the present invention;
FIG.6 is a schematic view showing an example of a frame format used in the base station apparatus according to Embodiment 1 of the present invention;
FIG.7 is a schematic view showing an example of a DPCH frame format used in the communication terminal apparatus according to Embodiment 1 of the present invention;
FIG.8 is a block diagram showing a configuration of a base station apparatus according to Embodiment 2 of the present invention;
FIG.9 is a block diagram showing a configuration of a communication terminal apparatus according to Embodiment 2 of the present invention;
FIG.10 is a schematic view showing an example of a frame format used in the base station apparatus according to Embodiment 2 of the present invention;
FIG.11 is a schematic view showing an example of a DPCH frame format used in the communication terminal apparatus according to Embodiment 2 of the present invention;
FIG.12 is a schematic view showing an example of a radio communication by the base station apparatus and the communication terminal apparatus according to Embodiment 2 of the present invention;
FIG.13 is a schematic view showing an example of a radio communication by a base station apparatus and a communication terminal apparatus according to Embodiment 3 of the present invention;
FIG.14 is a block diagram showing a configuration of the communication terminal apparatus according to Embodiment 3 of the present invention;
FIG.15 is a block diagram showing a configuration of the base station apparatus according to Embodiment 3 of the present invention;
FIG.16 is a schematic view showing an example of a DPCH frame format used in the communication terminal apparatus according to Embodiment 3 of the present invention;
FIG.17 is a block diagram showing a configuration of a communication terminal apparatus according to Embodiment 4 of the present invention;
FIG.18 is a block diagram showing a configuration of a base station apparatus according to Embodiment 4 of the present invention; and
FIG.19 is a schematic view showing an example of a DPCH frame format used in the communication terminal apparatus according to Embodiment 4 of the present invention.

Best Mode for Carrying out the Invention

With reference now to the attached drawings, embodiments of the present invention will be explained in detail below. Embodiments 1 and 2 will describe cases where a communication terminal apparatus is located in an area only covered by one base station apparatus and Embodiment 3 and Embodiment 4 will describe cases where communication terminal apparatus is located in areas covered by a plurality of base station apparatuses.

(Embodiment 1)

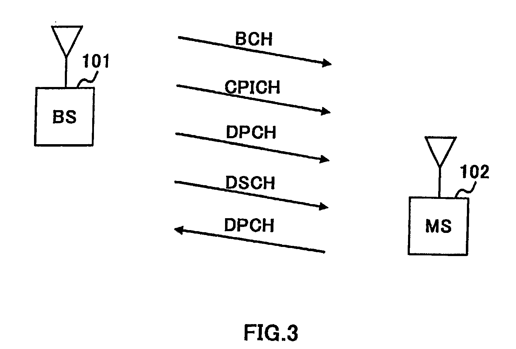

This embodiment will describe a case where a communication terminal apparatus decides a modulation/coding system. First, an outline of this embodiment will be explained with reference to FIG.3.
FIG.3 is a schematic view showing an example of a radio communication between a base station apparatus and communication terminal apparatus according to Embodiment 1 of the present invention. In FIG.3, communication terminal apparatus 102 is located in an area covered by base station apparatus 101 and carries out a radio communication with base station apparatus 101. Though not shown, communication terminal apparatuses other than communication terminal apparatus 102 also exist in the area covered by base station apparatus 101 and carry out radio communications with base station apparatus 101.
First, base station apparatus 101 sends a common known signal to the communication terminal apparatus using CPICH. Base station apparatus 101 further sends a signal including information indicating the transmit power of a CPICH signal and the transmit power of a DSCH signal of the own station (hereinafter simply referred to as "transmit power information") and a known signal to the communication terminal apparatus using a BCH (Broadcast Channel). A signal communicated using BCH is called a "BCH signal".

Here, a CPICH is a channel for the base station apparatus to send a common known signal to each communication terminal apparatus. A DSCH is a channel for the base station apparatus to send data such as high-speed rate packet to a predetermined communication terminal apparatus. An uplink DPCH is a channel for each communication terminal apparatus to send a signal including a known signal and speech data, etc. to the base station apparatus and a downlink DPCH is a channel for the base station apparatus to send a known signal, information indicating a communication terminal apparatus to which DSCH is sent and speech data, etc. to each communication terminal apparatus.

Communication terminal apparatus 102 estimates the reception quality of the DSCH signal sent by base station apparatus 101 using the reception quality of the CPICH signal sent from base station apparatus 101 and transmit power information included in the BCH signal sent from base station apparatus 101. Furthermore, communication terminal apparatus 102 decides a modulation system and error correcting coding system (hereinafter simply referred to as "modulation/coding system") applicable to this DSCH signal based on the estimated reception quality of the DSCH signal and sends a DPCH signal including information to notify the decided modulation/coding system (hereinafter referred to as "MCS1" ) to base station apparatus 101.

Base station apparatus 101 selects a communication terminal apparatus with a good downlink (that is, DSCH) situation and a good downlink service request (short delay time) from among all communication terminal apparatuses based on MCS1 included in DPCH signals sent from communication terminal apparatuses including communication terminal apparatus 102. After this, base station apparatus 101 sends the DSCH signal to the selected communication terminal apparatus using the modulation/coding system notified from this communication terminal apparatus. This is an outline of this embodiment.

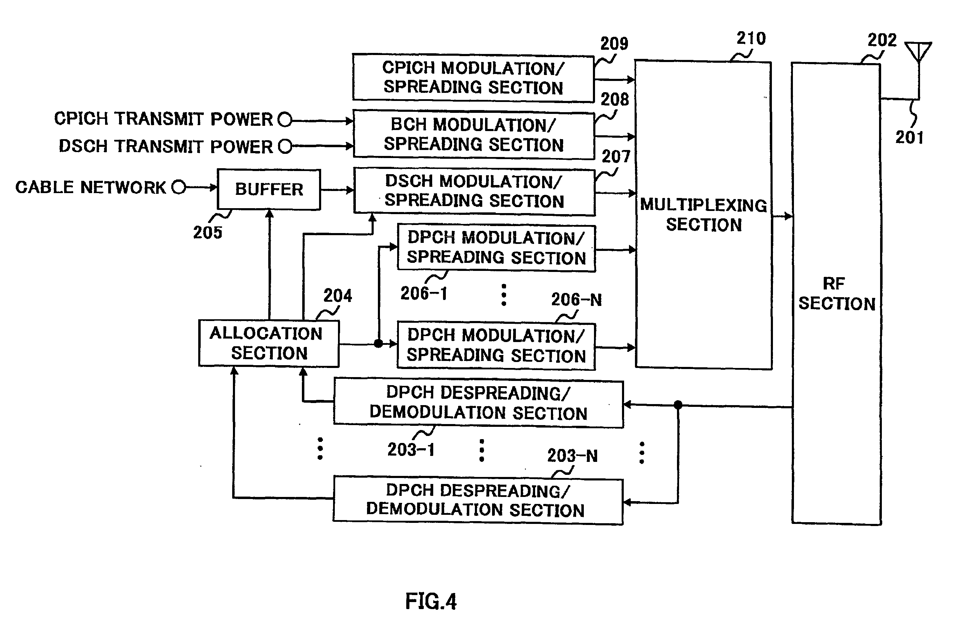

Then, configurations of the above-described base station apparatus and communication terminal apparatus will be explained. First, a configuration of the base station apparatus according to this embodiment will be explained with reference to FIG.4. FIG.4 is a block diagram showing a configuration of the base station apparatus according to Embodiment 1 of the present invention.

In FIG.4, RF section 202 carries out predetermined reception processing such as frequency conversion on a signal received by antenna 201 (received signal). Furthermore, RF section 202 carries out predetermined transmission processing such as frequency conversion on a multiplexed signal from multiplexing section 210 which will be explained later and sends the multiplexed signal subjected to transmission processing via antenna 201.

DPCH despreading/demodulation sections 203-1 to 203-N perform despreading processing on the received signal subjected to predetermined reception processing by RF section 202 using spreading codes assigned to DPCHs of communication terminal apparatus 1 to communication terminal apparatus N respectively. Furthermore, DPCH despreading/demodulation sections 203-1 to 203-N generate demodulated signals by carrying out demodulation processing on the signals obtained by the despreading processing, extract MCS1 from the demodulated signals generated and outputs to allocation section 204.

Allocation section 204 selects a communication terminal apparatus capable of sending a DSCH signal at the highest speed from among communication terminal apparatuses 1 to N using MSC1 of DPCH despreading/demodulation sections 203-1 to 203-N. Furthermore, allocation section 204 notifies the selected communication terminal apparatus to buffer 205 and DPCH modulation/spreading sections 206-1 to 206-N and notifies the selected communication terminal apparatus and the modulation/coding system notified from this communication terminal apparatus to DSCH modulation/spreading section 207.

Buffer 205 retains transmission data for each communication terminal apparatus via a cable network and outputs the retained transmission data of the communication terminal apparatus notified from allocation section 204 to DSCH modulation/spreading section 207. DSCH modulation/spreading section 207 carries out error correcting/coding processing, modulation processing and spreading processing corresponding to the modulation/coding system notified from allocation section 204 and generates a DSCH signal of the communication terminal apparatus notified from allocation section 204.

DPCH modulation/spreading sections 206-1 to 206-N carry out modulation processing on signals including transmission data of communication terminal apparatuses 1 to N, information indicating that the communication terminal apparatus notified from allocation section 204 is designated as the transmission destination of the DSCH signal (hereinafter referred to as "MCS2") and a known signal. Furthermore, DPCH modulation/spreading sections 206-1 to 206-N carry out despreading processing on the modulated signals using spreading codes assigned to DPCHs of communication terminal apparatuses 1 to N and thereby generate DPCH signals of communication terminal apparatuses 1 to N.

BCH modulation/spreading section 208 generates transmit power information using the transmit power of a CPICH signal and DSCH signal and performs modulation processing on signals including this transmit power information and known signal. Furthermore, BCH modulation/spreading section 208 carries out spreading processing on the modulated signal using a spreading code assigned to BCH and generates a BCH signal.

CPICH modulation/spreading section 209 carries out modulation processing on a signal including a known signal. Furthermore, CPICH modulation/spreading section 209 performs spreading processing on the modulated signal using a spreading code assigned to CPICH to generate a CPICH signal.

Multiplexing section 210 multiplexes the DPCH signals of communication terminal apparatuses 1 to N generated by DPCH modulation/spreading sections 206-1 to 206-N, DSCH signals generated by DSCH modulation/spreading section 207, BCH signals generated by BCH modulation/spreading section 208 and CPICH signals generated by CPICH modulation/spreading section 209 to generate a multiplexed signal. Multiplexing section 210 outputs the multiplexed signal to above-described RF section 202.

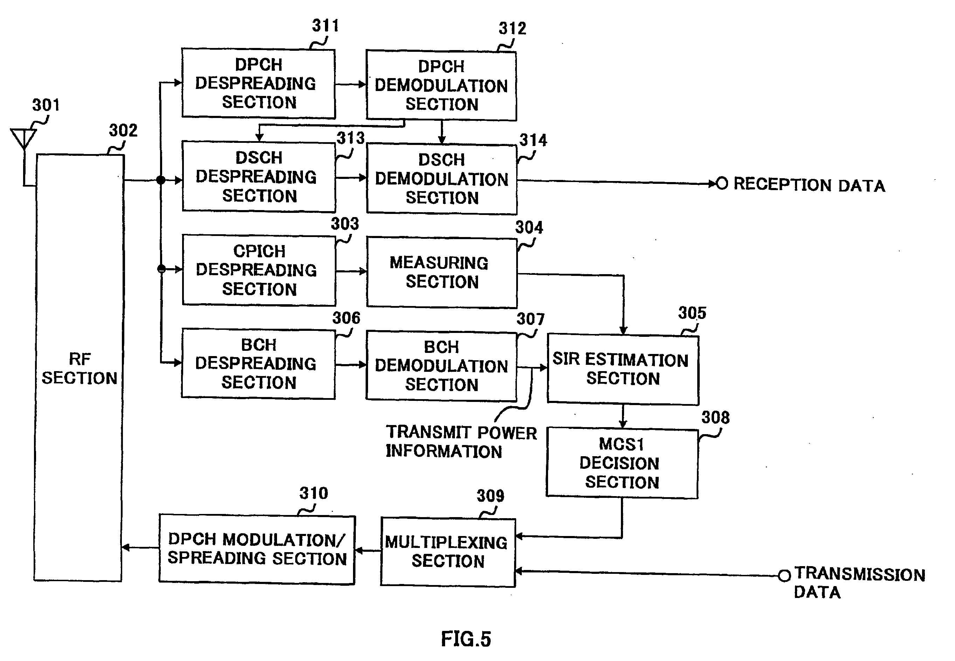

Then, a configuration of the communication terminal apparatus according to this embodiment will be explained with reference to FIG.5. FIG.5 is a block diagram showing a configuration of the communication terminal apparatus according to Embodiment 1 of the present invention.

In FIG.5, RF section 302 performs predetermined reception processing such as frequency conversion on a signal received from antenna 301 (received signal). Furthermore, RF section 302 performs predetermined transmission processing such as frequency conversion on the DPCH signal from DPCH modulation/spreading section 310, which will be described later, and sends the DPCH signal subjected to transmission processing via antenna 301.

CPICH despreading section 303 performs despreading processing on the received signal subjected to reception processing by RF section 302 using a spreading code assigned to the CPICH. Measuring section 304 measures the reception quality (e.g., SIR) of the signal (that is, CPICH signal) subjected to despreading processing by CPICH despreading section 303 and outputs the measured reception quality of the CPICH signal to SIR estimation section 305.

BCH despreading section 306 performs despreading processing on the received signal subjected to reception processing by RF section 302 using a spreading code assigned to the BCH. BCH demodulation section 307 carries out demodulation processing on the received signal subjected to despreading processing by BCH despreading section 306 to generate a demodulated signal. Furthermore, BCH demodulation section 307 extracts transmit power information from the demodulated signal generated and outputs the extracted transmit power information to SIR estimation section 305.

SIR estimation section 305 estimates the reception quality of the DSCH signal using the reception quality of the CPICH signal from measuring section 304 and transmit power information from BCH demodulation section 307.

MCS1 decision section 308 decides a modulation/coding system applicable to the DSCH signal based on the estimated reception quality of the DSCH signal, creates MCS1 according to the decision result and outputs to multiplexing section 309.

Multiplexing section 309 multiplexes a known signal, transmission data and MCS1 from MCS1 decision section 308 to generate a multiplexed signal. DPCH modulation/spreading section 310 performs modulation processing on the multiplexed signal from multiplexing section 309. Furthermore, DPCH modulation/spreading section 310 carries out spreading processing on the modulated multiplexed signal using a spreading code assigned to the DPCH of this communication terminal apparatus to generate a DPCH signal. Furthermore, DPCH modulation/spreading section 310 outputs the generated DPCH signal to above-described RF section 302.

On the other hand, DPCH despreading section 311 carries out despreading processing on the received signal subjected to reception processing by RF section 302 using a spreading code assigned to this communication terminal apparatus. DPCH demodulation section 312 carries out demodulation processing on the signal despread by DPCH despreading section 311 to generate a demodulated signal. Furthermore, DPCH demodulation section 312 extracts MCS2 from the demodulated signal generated and thereby recognizes to which communication terminal apparatus the DSCH signal is sent. Furthermore, DPCH demodulation section 312 outputs the recognition result to DSCH despreading section 313 and DSCH demodulation section 314.

When DSCH despreading section 313 recognizes that the DSCH signal has been sent to this communication terminal apparatus from the recognition result from DPCH demodulation section 312, DSCH despreading section 313 performs despreading processing corresponding to the modulation/spreading system decided by MCS1 decision section 308 on the received signal subjected to reception processing by RF section 302. DSCH demodulation section 314 carries out demodulation processing on the received signal despread by DSCH despreading section 313 and thereby creates reception data.

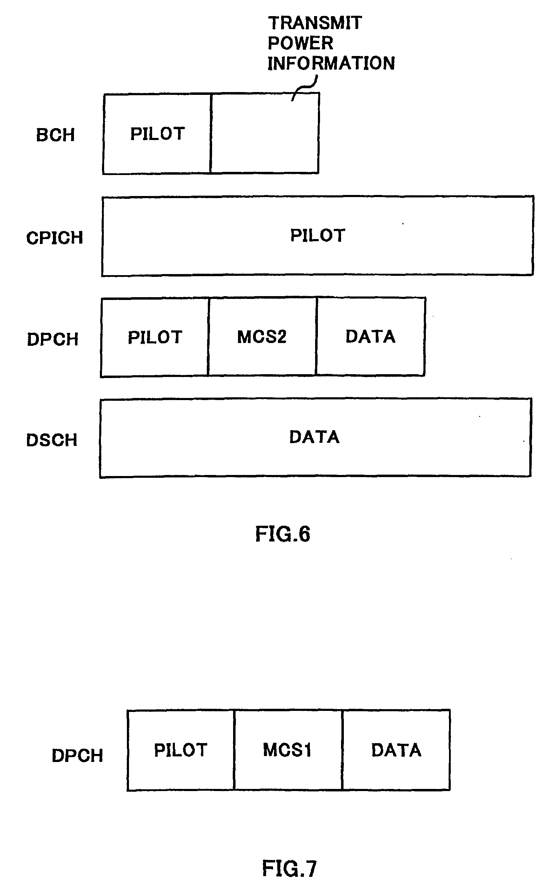

Then, operations of the base station apparatus and communication terminal apparatus in the above-described configurations will be explained with reference to FIG.6 and FIG.7 in addition of FIG.3 to FIG.5. FIG.6 is a schematic view showing an example of a frame format used in the base station apparatus according to Embodiment 1 of the present invention. FIG.7 is a schematic view showing an example of a DPCH frame format used in the communication terminal apparatus according to Embodiment 1 of the present invention.

At the base station apparatus, after a known signal (PILOT) shown in FIG.6 is modulated, CPICH modulation/spreading section 209 performs spreading processing using a spreading code assigned to the CPICH. A CPICH signal is generated in this way. The CPICH signal generated is output to multiplexing section 210.

BCH modulation/spreading section 208 generates transmit power information using the transmit power of the CPICH signal and the transmit power of the DSCH signal and this transmit power information and known signal are time-multiplexed as shown in FIG.6. As shown in FIG.6, it is apparent that the BCH signal, CPICH signal, DPCH signal and DSCH signal are code-multiplexed on a same frequency band. Furthermore, the time-multiplexed signal is modulated and then spread using a spreading code assigned to the BCH. A BCH signal is generated in this way. The BCH signal generated is output to multiplexing section 210.

The DSCH signal generated by DSCH modulation/spreading section 207 is output to multiplexing section 210. The DPCH signals generated by DPCH modulation/spreading sections 206-1 to 206-N are output to multiplexing section 210. The DSCH signal generated by DSCH modulation/spreading section 207 and DPCH signals generated by DPCH modulation/spreading sections 206-1 to 206-N will be described in detail later.

Multiplexing section 210 code-multiplexes the BCH signal, CPICH signal, DSCH signal and DPCH signals of communication terminal apparatuses 1 to N are code-multiplexed as shown in FIG.6. A multiplexed signal is generated in this way. The multiplexed signal generated is subjected to predetermined transmission processing by RF section 202 and then sent via antenna 201. The signals sent in this way are received by communication terminal apparatuses 1 to N (communication terminal apparatus configured as shown in FIG.5).

At communication terminal apparatuses 1 to N, the signals sent from the base station apparatus as described above are received by antenna 301 and then subjected to reception processing by RF section 302. The received signal subjected to reception processing is output to CPICH despreading section 303, BCH despreading section 306, DPCH despreading section 311 and DSCH despreading section 313. The processing at DPCH despreading section 311 and DSCH despreading section 313 will be described in detail later.

CPICH despreading section 303 performs despreading processing on the received signal subjected to reception processing by RF section 302 using the spreading code assigned by this communication terminal apparatus and then performs demodulation processing. In this way, a demodulated signal, that is, a CPICH signal is generated. The CPICH signal generated is output to measuring section 304.

Measuring section 304 measures the reception quality (e.g., SIR) of the CPICH signal generated. The measured reception quality of the CPICH signal is output to SIR estimation section 305.

BCH despreading section 306 performs despreading processing on the received signal subjected to reception processing by RF section 302 using the spreading code assigned to the BCH. BCH demodulation section 307 performs demodulation processing on the received signal despread by BCH despreading section 306 to generate a demodulated signal. Furthermore, transmit power information is extracted from the demodulated signal generated and the extracted transmit power information is output to SIR estimation section 305.

SIR estimation section 305 estimates the reception quality (reception SIR) of the DSCH signal using the reception quality of the CPICH signal from measuring section 304 and transmit power information from BCH demodulation section 307. The reception quality of the DSCH signal estimated here is equivalent to the reception quality at the communication terminal apparatus of the DSCH signal sent from the base station apparatus. More specifically, the reception quality of the DSCH signal is measured according to the expression shown below.

$$\text{SIR estimated value of DSCH signal [dB]} =$$

$$\text{Reception SIR estimated value of CPICH signal [dB]}$$

$$+ \text{ transmit power of DSCH signal [dB] - transmit power}$$

$$\text{of CPICH signal [dB]} \qquad ①$$

The reception quality of the DSCH signal estimated by SIR estimation section 305 is output to MCS1 decision section 308.

MCS1 decision section 308 decides the modulation/coding system that can be used for the DSCH signal based on the reception quality of the DSCH signal estimated by SIR estimation section 305. More specifically, for example, a table indicating (reception quality of the estimated DSCH signal) vs. (modulation/coding system to attain required service quality) is created beforehand and it is possible to decide the modulation/coding system corresponding to the reception quality of the estimated DSCH signal.

Furthermore, MCS1 decision section 308 creates information (that is, MCS1) to notify the decided modulation/coding system. The MCS1 created is output to multiplexing section 309.

Multiplexing section 309 creates a multiplexed signal by multiplexing a known signal, transmission data and MCS1 from MCS1 decision section 308. That is, for example, a known signal is inserted into the PILOT section, MCS1 is inserted in the MCS1 section and transmission data is inserted into the DATA section as shown in FIG.7 and thereby a multiplexed signal is generated. DPCH modulation/spreading section 310 performs spreading processing on the multiplexed signal generated using the spreading code assigned to the DPCH of this communication terminal apparatus. In this way, a DPCH signal is generated. The DPCH signal generated is subjected to transmission processing by RF section 302 and then sent to the base station apparatus via antenna 301.

Thus, the signals sent from communication terminal apparatuses 1 to N are received by the base station apparatus. At the base station apparatus, the signals sent to communication terminal apparatuses 1 to N as shown above are received via antenna 201 and subjected to reception processing by RF section 202. The received signal subjected to reception processing by RF section 202 is output to DPCH despreading/demodulation sections 203-1 to 203-N.

DPCH despreading/demodulation sections 203-1 to 203-N perform despreading processing on the received signal subjected to reception processing by RF section 202 using spreading codes assigned to DPCHs of communication terminal apparatuses 1 to N. Furthermore, DPCH despreading/demodulation sections 203-1 to 203-N generate demodulated signals by applying demodulation processing to the signals obtained through despreading processing. After this, DPCH despreading/demodulation sections 203-1 to 203-N extract MCS1s of communication terminal apparatuses 1 to N from the demodulated signals. The extracted MCS is of communication terminal apparatuses 1 to N are output to allocation section 204.

Allocation section 204 selects a communication terminal apparatus capable of sending a DSCH signal at the highest speed from among communication terminal apparatuses 1 to N using MCS1s of DPCH despreading/demodulation sections 203-1 to 203-N. After this, allocation section 204 notifies buffer 205 and DPCH modulation/spreading sections 206-1 to 206-N which communication terminal apparatus has been selected as the transmission destination of the DSCH signal. Furthermore, allocation section 204 notifies DSCH modulation/spreading section 207 which communication terminal apparatus has been selected as the transmission destination of the DSCH signal and notifies the modulation/coding system notified by this communication terminal apparatus.

Buffer 205 outputs the transmission data corresponding to the communication terminal apparatus notified from allocation section 204 to DSCH modulation/spreading section 207. DSCH modulation/spreading section 207 carries out error correcting/coding processing, modulation processing and spreading processing corresponding to the modulation/coding system notified from allocation section 204 on the transmission data output from buffer 205. In this way, a DSCH signal of the communication terminal apparatus notified from allocation section 204 is generated. The generated DSCH signal is output to multiplexing section 210.

DPCH modulation/spreading sections 206-1 to 206-N each generate transmission data of communication terminal apparatuses 1 to N, MCS2 indicating that the communication terminal apparatus notified from allocation section 204 is designated as the transmission destination of the DSCH signal and a signal including a known signal. That is, for example, according to FIG.6, DPCH modulation/spreading section 206-1 (206-N) inserts a known signal into the PILOT section, inserts MCS2 into the MCS2 section and inserts transmission data of communication terminal apparatus 1 (communication terminal apparatus N) into the DATA section.

Furthermore, after performing modulation processing on the signals generated as described above, DPCH modulation/spreading sections 206-1 to 206-N then performs despreading processing using spreading codes assigned to DPCHs of communication terminal apparatuses 1 to N. Thus, DPCH modulation/spreading sections 206-1 to 206-N generate DPCH signals of their respective communication terminal apparatuses 1 to N. The generated DPCH signals of communication terminal apparatuses 1 to N are output to multiplexing section 210.

Multiplexing section 210 generates a multiplexed signal by multiplexing DPCH signals of communication terminal apparatuses 1 to N generated by their respective DPCH modulation/spreading sections 206-1 to 206-N, DSCH signal generated by DSCH modulation/spreading section 207, BCH signal generated by BCH modulation/spreading sections 208 and CPICH signal generated by CPICH modulation/spreading sections 209. The CPICH signal and BCH signal are generated as shown above.

The multiplexed signal generated by multiplexing section 210 is subjected to transmission processing by RF section 202 and then sent via antenna 201. The signals sent in this way are received by communication terminal apparatuses 1 to N.

At communication terminal apparatuses 1 to N, the signals sent from the base station apparatus as described above are received by antenna 301, subjected to reception processing by RF section 302 and output to CPICH despreading section 303, BCH despreading section 306, DPCH despreading section 311 and DSCH despreading section 313. The processing by BCH despreading section 306 and CPICH despreading section 303 is as described above.

DPCH despreading section 311 performs despreading processing on the signal subjected to reception processing by RF section 302 using a spreading code assigned to the communication terminal apparatus. The received signal despread by DPCH despreading section 311 is demodulated by DPCH demodulation section 312. A demodulated signal is generated in this way.

Furthermore, DPCH demodulation section 312 extracts MCS2 from the demodulated signal generated. DPCH demodulation section 312 recognizes to which communication terminal apparatus the DSCH signal is sent from the base station apparatus using this MCS2. The recognition result is output from DPCH demodulation section 312 to DSCH despreading section 313 and DSCH demodulation section 314.

When DSCH despreading section 313 recognizes from the recognition result from DPCH demodulation section 312 that a DSCH signal is sent to the communication terminal apparatus, DSCH despreading section 313 carries out despreading processing corresponding to the modulation/coding system decided by MCS1 decision section 308 on the received signal subjected to reception processing by RF section 302. The received signal subjected to despreading processing is subjected to demodulation processing corresponding to the modulation/coding system decided by MCS1 decision section 308 by DSCH demodulation section 314. Reception data is generated in this way. These are the operations of the base station apparatus and communication terminal apparatus according to this embodiment.

Then, effects of the base station apparatus and communication terminal apparatus according to this embodiment will be explained with reference to FIG.2. Suppose the transmit power of the CPICH signal at the base station apparatus is 50 [dB], the transmit power of the DSCH signal at the base station apparatus is 45 [dB] and the reception quality of the CPICH signal at the communication terminal apparatus is 25 [dB].

In this case, it is estimated at the communication terminal apparatus according to above-described Expression ① that the reception quality of the DSCH signal is 25 (reception quality of the CPICH signal) +45 (transmit power of the DSCH signal) - 50 (transmit power of the CPICH signal) = 20 [dB]. That is, the reception quality of the DSCH signal can be estimated accurately as shown in FIG.2.

Thus, in this embodiment, the base station apparatus notifies transmit power information on the transmit power of the DSCH signal and CPICH signal to the communication terminal apparatus, the communication terminal apparatus estimates the reception quality of the DSCH signal using the reception quality of the CPICH signal and the transmit power information notified from the base station apparatus and decides the modulation/coding system applicable to the DSCH signal based on the estimated reception quality. This allows the communication terminal apparatus to accurately recognize the reception quality of the DSCH signal, and can thereby accurately decide the modulation/coding system applicable to the DSCH signal so that the reception quality of the DSCH signal satisfies the required quality and the best DSCH signal (DSCH signal using an optimal modulation/coding system) can be received.

This makes it possible to provide a base station apparatus capable of sending a DSCH signal to be received with optimal quality by a communication terminal apparatus as well as a communication terminal apparatus capable of receiving the DSCH signal with optimal quality .

(Embodiment 2)

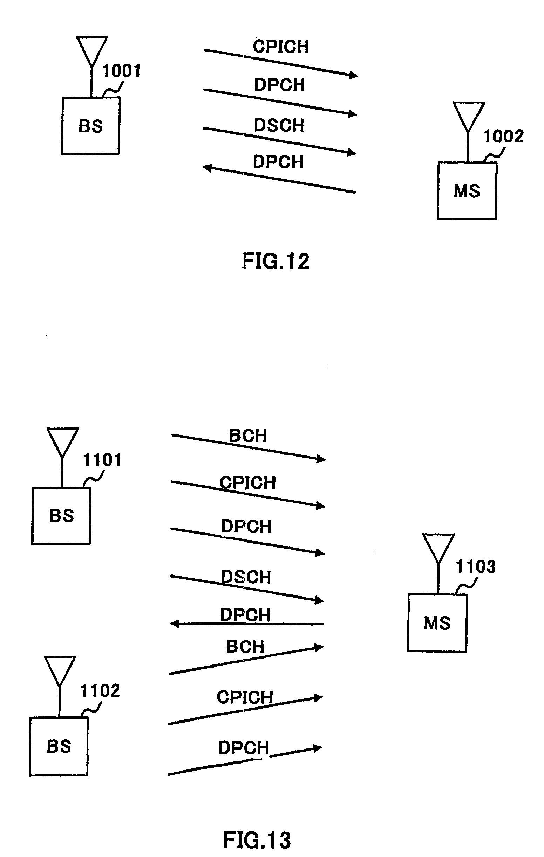

This embodiment will describe a case where the base station apparatus decides a modulation/coding system. First, an outline of this embodiment will be explained with reference to FIG.12. FIG.12 is a schematic view showing an example of a radio communication between the base station apparatus and communication terminal apparatus according to Embodiment 2 of the present invention.

In FIG.12, suppose communication terminal apparatus 1002 notifies the reception quality of the CPICH signal to the base station apparatus and base station apparatus 1001 estimates the reception quality of the DSCH signal at communication terminal apparatus 1002 using the ratio in transmit power of the DSCH signal to the CPICH signal at base station apparatus 1001.

Furthermore, base station apparatus 1001 selects a communication terminal apparatus with a good downlink (that is, DSCH) situation and a good downlink service request (with a short delay time) (here, suppose communication terminal apparatus 1002) from among all communication terminal apparatuses based on the estimated reception quality of the DSCH signal.

After this, base station apparatus 1001 decides a modulation/coding system applicable to the DSCH signal based on the reception quality of the CPICH signal at selected communication terminal apparatus 1002. Furthermore, base station apparatus 1001 sends the DSCH signal to selected communication terminal apparatus 1002 using the decided modulation/coding system. This is an outline of this embodiment.

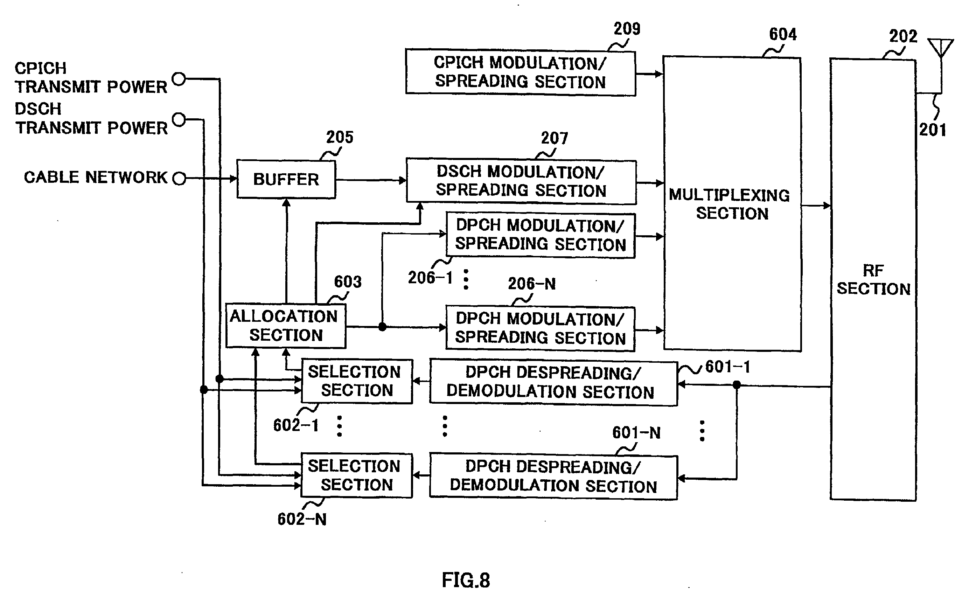

Then, configurations of the above-described base station apparatus and communication terminal apparatus will be explained. First, a configuration of the base station apparatus of this embodiment will be explained with reference to FIG.8. FIG.8 is a block diagram showing a configuration of a base station apparatus according to Embodiment 2 of the present invention. The same components in FIG.8 as those in Embodiment 1 (FIG.4) are assigned the same reference numerals as those in FIG.4 and detailed explanations thereof are omitted.

DPCH despreading/demodulation sections 601-1 to 601-N carry out despreading processing on the received signal subjected to predetermined reception processing by RF section 202 using spreading codes assigned to DPCHs of communication terminal apparatuses 1 to N. Furthermore, DPCH despreading/demodulation sections 601-1 to 601-N carry out demodulation processing on the signals obtained by despreading processing to generate demodulated signals, extract information indicating the reception quality of the CPICH signal from the demodulated signal generated and output the information to selection sections 602-1 to 602-N.

Selection sections 602-1 to 602-N each decide modulation/coding systems applicable to the DSCH signals to communication terminal apparatuses 1 to N using information indicating the reception quality of the CPICH signals from DPCH despreading/demodulation sections 601-1 to 601-N and output the decision results to allocation section 603.

Allocation section 603 has the same configuration as that of allocation section 204 in Embodiment 1 except that allocation section 603 selects a communication terminal apparatus capable of sending the DSCH signal at the highest speed from among communication terminal apparatuses 1 to N.

Multiplexing section 604 multiplexes the DPCH signals of communication terminal apparatuses 1 to N generated by DPCH modulation/spreading sections 206-1 to 206-N, DSCH signal generated by DSCH modulation/spreading section 207, and CPICH signal generated by CPICH modulation/spreading section 209 to generate a multiplexed signal.

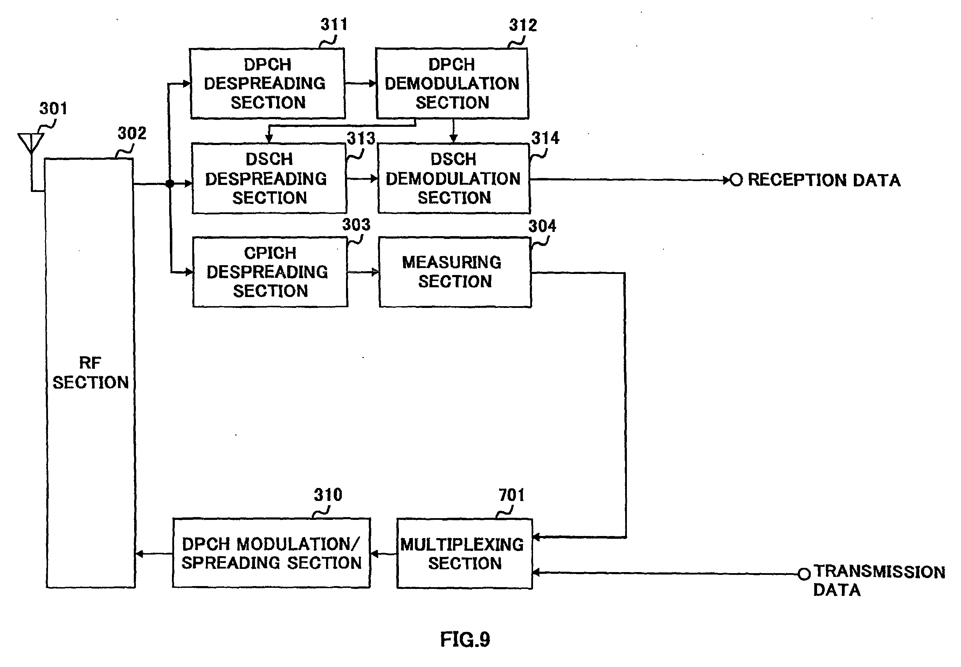

Then, a configuration of the communication terminal apparatus according to this embodiment will be explained with reference to FIG.9. FIG.9 is a block diagram showing a configuration of the communication terminal apparatus according to Embodiment 2 of the present invention. The same components in FIG.9 as those in Embodiment 1 (FIG.5) are assigned the same reference numerals as those in FIG.5 and detailed explanations thereof are omitted. Multiplexing section 701 multiplexes a known signal, transmission data and information indicating the reception quality of the CPICH signal from measuring section 304 to generate a multiplexed signal.

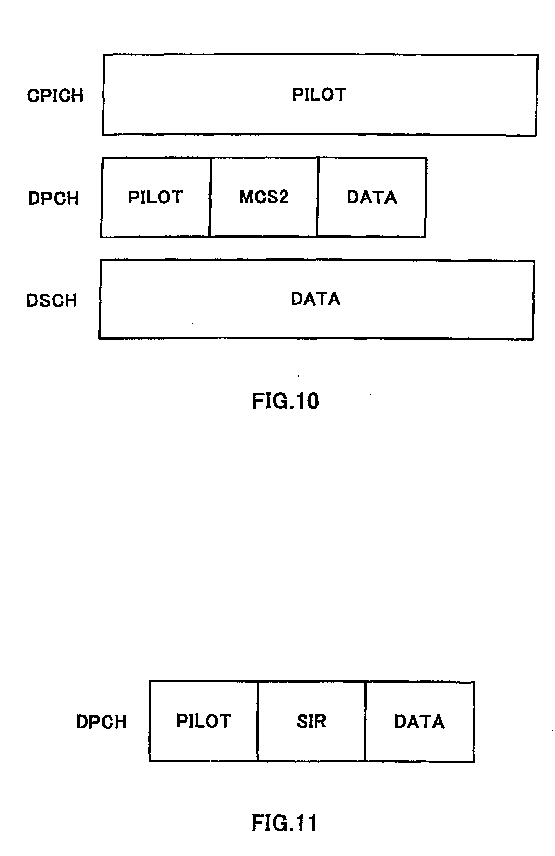

Then, operations of the base station apparatus and communication terminal apparatus in the above-described configurations will be explained with reference to FIG.10 and FIG.11 in addition to FIG.8 and FIG.9. FIG.10 is a schematic view showing an example of a frame format used in the base station apparatus according to Embodiment 2 of the present invention. FIG.11 is a schematic view showing an example of a DPCH frame format used in the communication terminal apparatus according to Embodiment 2 of the present invention. Detailed explanations of the same operations in this embodiment as those in Embodiment 1 are omitted.

At base station apparatus, multiplexing section 604 code-multiplexes the CPICH signal, DSCH signal and DPCH signals of communication terminal apparatuses 1 to N as shown in FIG.10. The multiplexed signal generated is sent via RF section 202 and antenna 201. The signal sent in this way is received by communication terminal apparatuses 1 to N (communication terminal apparatus shown in FIG.9).

At communication terminal apparatuses 1 to N, measuring section 304 measures the reception quality of the CPICH signal and generates information indicating the reception quality of the measured CPICH signal.

The information indicating the reception quality of the CPICH signal is output to multiplexing section 701.

Multiplexing section 701 multiplexes a known signal, transmission data, and information indicating the reception quality of the CPICH signal to generate a multiplexed signal. That is, as shown in FIG.11, a known signal is inserted into the PILOT section and the reception quality of the CPICH signal is inserted into the SIR section and transmission data is inserted into the DATA section and thereby a multiplexed signal is generated. In this way, DPCH modulation/spreading section 310 generates a DPCH signal and the DPCH signal generated is sent to the base station apparatus via RF section 302 and antenna 301.

Thus, the signals sent from communication terminal apparatuses 1 to N are received by the base station apparatus. At the base station apparatus, the signals sent to communication terminal apparatuses 1 to N as shown above are output to DPCH despreading/demodulation sections 601-1 to 601-N via antenna 201 and RF section 202.

After performing despreading processing on the received signal from RF section 202, DPCH despreading/demodulation sections 601-1 to 601-N then performs demodulation processing on the signals obtained through despreading processing to generate a demodulated signal. Furthermore, information indicating the reception quality of the CPICH signal is extracted from the demodulated signal generated. The information indicating the reception quality of the CPICH signals of communication terminal apparatuses 1 to N extracted from DPCH despreading/demodulation sections 601-1 to 601-N respectively is output to selection sections 602-1 to 602-N.

Selections sections 602-1 to 602-N estimate the reception quality of the DSCH signals of communication terminal apparatuses 1 to N using information indicating the reception quality of the CPICH signals from DPCH despreading/demodulation sections 601-1 to 601-N and the transmit power of the CPICH signal and DSCH signal. The method of estimating the reception quality of the DSCH signals is the same as that of SIR estimation section 305 of the communication terminal apparatus in Embodiment 1 (FIG.5).

Furthermore, selection sections 602-1 to 602-N each decide the modulation/coding systems applicable to the DSCH signals corresponding to communication terminal apparatuses 1 to N based on the reception quality of the estimated DSCH signals. The method of deciding the modulation/coding systems is the same as that of MCS1 decision section 308 of the communication terminal apparatus in Embodiment 1 (FIG.5). The modulation/coding systems corresponding to communication terminal apparatuses 1 to N decided by selection sections 602-1 to 602-N are output to allocation section 603.

Allocation section 603 selects a communication terminal apparatus capable of sending the DSCH signal at the highest speed of all communication terminal apparatuses 1 to N using the modulation/coding systems corresponding to communication terminal apparatuses 1 to N. After this, allocation section 603 notifies buffer 205 and DPCH modulation/spreading sections 206-1 to 206-N of information as to which communication terminal apparatus has been selected as the transmission destination of the DSCH signal. Furthermore, allocation section 603 notifies DSCH modulation/spreading section 207 of information as to which communication terminal apparatus has been selected as the transmission destination of the DSCH signal and the modulation/coding system notified from this communication terminal apparatus.

Hereafter, buffer 205, DSCH modulation/spreading section 207 and DPCH modulation/spreading sections 206-1 to 206-N will perform the processing explained in Embodiment 1.

Multiplexing section 604 generates a multiplexed signal by multiplexing DPCH signals of communication terminal apparatuses 1 to N generated by their respective DPCH modulation/spreading sections 206-1 to 206-N, DSCH signal generated by DSCH modulation/spreading section 207, and CPICH signal generated by CPICH modulation/spreading sections 209.

The multiplexed signal generated is sent to communication terminal apparatuses 1 to N via RF section 202 and antenna 201. The signal sent in this way is received by communication terminal apparatuses 1 to N. The subsequent processing by communication terminal apparatuses 1 to N is the same as that in Embodiment 1 and therefore detailed explanations thereof are omitted.

Thus, according to this embodiment, the communication terminal apparatus notifies the reception quality of the CPICH signal to the base station apparatus and the base station apparatus estimates the reception quality of the DSCH signal at the communication terminal apparatus using the reception quality of the CPICH signal notified by the communication terminal apparatus and the transmit power of the DSCH signal and CPICH signal at the base station apparatus. Furthermore, the base station apparatus decides the modulation/coding system applicable to the DSCH signal based on the estimated reception quality of the DSCH signal at the communication terminal apparatus. This allows the base station apparatus to correctly recognize the reception quality of the DSCH signal at the communication terminal apparatus, and thereby correctly decide the modulation/coding system applicable to the DSCH signal so that the reception quality of the DSCH signal satisfies the required quality and the optimal DSCH signal (DSCH signal using an optimal modulation/coding system) can be received.

Therefore, this embodiment can provide a base station apparatus capable of sending a DSCH signal received with optimal quality by a communication terminal apparatus as well as a communication terminal apparatus capable of receiving the DSCH signal with optimal quality.

(Embodiment 3)

Embodiment 3 and Embodiment 4 will describe cases where the communication terminal apparatus is located in areas covered by a plurality of base station apparatuses. This embodiment will describe a case where the communication terminal apparatus decides the base station apparatus which becomes the request destination of a DSCH signal and the modulation/coding system. First, an outline of this embodiment will be explained with reference to FIG.13. FIG.13 is a schematic view showing an example of a radio communication between the base station apparatus and communication terminal apparatus according to Embodiment 3 of the present invention.

In FIG.13, suppose communication terminal apparatus 1103 is located in areas (here the area covered by base station apparatus 1101 and the area covered by base station apparatus 1102) covered by a plurality of base station apparatuses. Suppose, though not shown, communication terminal apparatuses other than communication terminal apparatus 1103 are also located in the area covered by base station apparatus 1101 and the area covered by base station apparatus 1102.

Base station apparatus 1101 and base station apparatus 1102 each send their specific BCH signals. Furthermore, base station apparatus 1101 and base station apparatus 1102 each send their specific CPICH signals. Suppose the BCH signal and CPICH signals here are the same as those in Embodiment 1.

Communication terminal apparatus 1103 estimates the reception quality of the DSCH signal sent from base station apparatus 1101 using the reception quality of the CPICH signal sent from base station apparatus 1101 and the transmit power information included in the BCH signal sent from base station apparatus 1101. Furthermore, communication terminal apparatus 1103 estimates the reception quality of the DSCH signal sent from base station apparatus 1102 using the reception quality of the CPICH signal sent from base station apparatus 1102 and the transmit power information included in the BCH signal sent from base station apparatus 1102.

Communication terminal apparatus 1103 further selects a base station apparatus corresponding to the DSCH signal with the optimal estimated reception quality (here, suppose base station apparatus 1101) as the request destination of the DSCH signal. Furthermore, communication terminal apparatus 1103 decides the modulation/coding system applicable to this DSCH signal based on the reception quality of the estimated DSCH signal corresponding to selected base station apparatus 1101.

After this, communication terminal apparatus 1103 sends a DPCH signal including information to notify the request destination of the DSCH signal (hereinafter referred to as "base station selection information") and MCS1 (that is, information to notify the decided modulation/coding system).

Base station apparatus 1101 and base station apparatus 1102 receive the DPCH signals from their respective communication terminal apparatuses and recognize the communication terminal apparatus requesting the own station to send a DSCH signal using the base station selection information included in the DPCH signal. Furthermore, base station apparatus 1101 and base station apparatus 1102 also select a communication terminal apparatus having a good downlink (that is, DSCH) situation and good downlink service request (short delay time) from among all the communication terminal apparatuses requesting the own station to send a DSCH signal.

After this, base station apparatus 1101 and base station apparatus 1102 send the DSCH signal to the selected communication terminal apparatus using the modulation/coding system notified by this communication terminal apparatus. Here, communication terminal apparatus 1103 receives the DSCH signal from base station apparatus 1101. This is an outline of this embodiment.

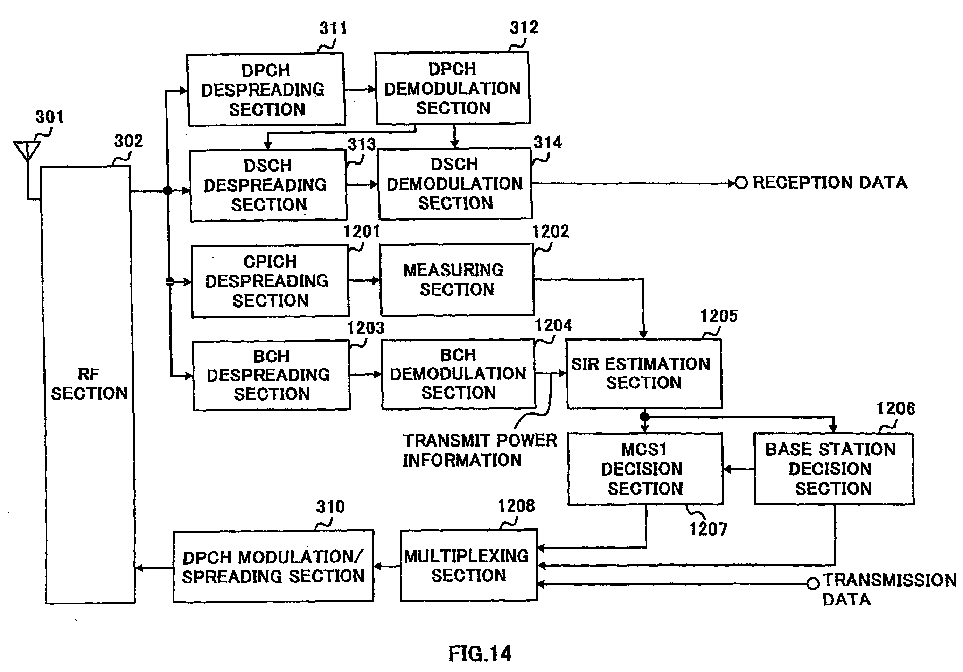

Then, configurations of the above-described base station apparatus and communication terminal apparatus will be explained. First, a configuration of the communication terminal apparatus of this embodiment will be explained with reference to FIG.14. FIG.14 is a block diagram showing a configuration of a communication terminal apparatus according to Embodiment 3. The same components in FIG.14 as those in Embodiment 1 (FIG.5) are assigned the same reference numerals as those in FIG .5 and detailed explanations thereof are omitted.

In FIG.14, CPICH despreading section 1201 generates a CPICH signal for each base station apparatus by carrying out despreading processing on the received signal subjected to reception processing by RF section 302 using a spreading code assigned to the CPICH of each base station apparatus.

Measuring section 1202 measures the reception quality (e.g., SIR) of the CPICH signal for each base station apparatus generated by CPICH despreading section 1201 and outputs the reception quality of the CPICH signal for each measured base station apparatus to SIR estimation section 1205.

BCH despreading section 1203 performs despreading processing on the received signal subjected to reception processing by RF section 302 using a spreading code assigned to BCH of each base station apparatus. BCH demodulation section 1204 generates a demodulated signal for each base station apparatus by carrying out demodulation processing on the received signal subjected to despreading processing by BCH despreading section 1203. Furthermore, BCH demodulation section 1204 extracts transmit power information from the demodulated signal generated for each base station apparatus and outputs the extracted transmit power information for each base station apparatus to SIR estimation section 1205.

SIR estimation section 1205 estimates the reception quality of the DSCH signal for each base station apparatus using the reception quality of the CPICH signal for each base station apparatus from measuring section 1202 and transmit power information for each base station apparatus from BCH demodulation section 1204. SIR estimation section 1205 outputs the estimated reception quality of the DSCH signal for each base station apparatus to base station decision section 1206 and MCS1 decision section 1207.

Base station decision section 1206 selects a base station apparatus corresponding to the DSCH signal having the optimal estimated reception quality as the request destination of the DSCH signal using the reception quality of the estimated DSCH signal for each base station apparatus. This base station decision section 1206 outputs the selection result to MCS1 decision section 1207 and at the same time generates base station selection information to notify the request destination of the DSCH signal and outputs to multiplexing section 1208.

MCS1 decision section 1207 extracts the reception quality of the DSCH signal corresponding to the base station apparatus selected as the request destination of the DSCH signal based on the reception quality of the DSCH signal for each base station apparatus estimated from SIR estimation section 1205 and the selection result from base station decision section 1206 first. Furthermore, MCS1 decision section 1207 decides the modulation/coding system applicable to the DSCH signal using the extracted reception quality and generates MCS1 to notify the decided modulation/coding system.

Multiplexing section 1208 generates a multiplexed signal by multiplexing the transmission data, base station selection information and MCS1.

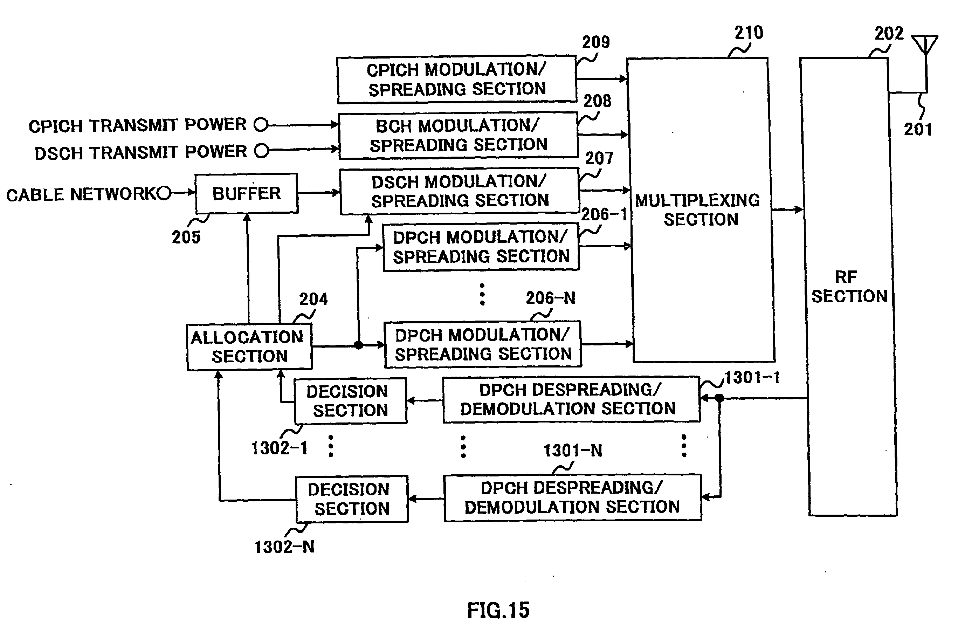

Then, a configuration of the base station apparatus according to this embodiment will be explained with reference to FIG.15. FIG.15 is a block diagram showing a configuration of the base station apparatus according to Embodiment 3 of the present invention. The same components in FIG.15 as those in Embodiment 1 (FIG.4) are assigned the same reference numerals as those in FIG.4 and detailed explanations thereof are omitted.

In FIG.15, DPCH despreading/demodulation sections 1301-1 to 1301-N have the same configurations as DPCH despreading/demodulation sections 203-1 to 203-N in Embodiment 1 (FIG.4) except that MCS1 and base station selection information are extracted from the demodulated signals and output to decision sections 1302-1 to 1302-N.

When the base station selection information from DPCH despreading/demodulation sections 1301-1 to 1301-N indicates that the own station is requested to transmit a DSCH signal, decision sections 1302-1 to 1302-N output MCS1s from DPCH despreading/demodulation sections 1301-1 to 1301-N to allocation section 204.

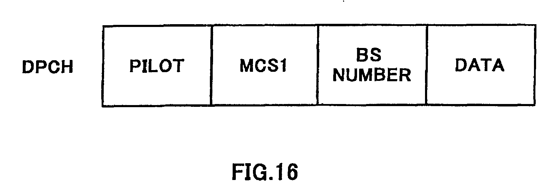

Then, operations of the base station apparatus and communication apparatus in the above-described configurations will be explained with reference to FIG. 16 in addition to FIG.14 and FIG.15. FIG.16 is a schematic view showing an example of a DPCH frame format used in the communication terminal apparatus according to Embodiment 3 of the present invention. Detailed explanations of the same operations in this embodiment as those in Embodiment 1 are omitted.

At communication terminal apparatuses 1 to N, the signals sent from the base station apparatus are output to CPICH despreading section 1201, BCH despreading section 1203, DPCH despreading section 311 and DSCH despreading section 313 via antenna 301 and RF section 302 as described above. The processing at DPCH despreading section 311 and DSCH despreading section 313 is the same as that explained in Embodiment 1.

CPICH despreading section 1201 performs despreading processing on the received signal subjected to reception processing by RF section 302 using a spreading code assigned to the CPICH of each base station apparatus. In this way, a CPICH signal is generated for each base station apparatus.

Measuring section 1202 measures the reception quality (e.g., SIR) of the CPICH signal for each base station apparatus generated by CPICH despreading section 1201. The reception quality of the measured CPICH signal for each base station apparatus is output to SIR estimation section 1205.

BCH despreading section 1203 performs despreading processing on the received signal subjected to reception processing by RF section 302 using the spreading code assigned to the BCH of base station apparatus. BCH demodulation section 1204 performs demodulation processing on the received signal despread by BCH despreading section 1203 to generate a demodulated signal for each base station apparatus. Furthermore, transmit power information is extracted from the demodulated signal generated for each base station apparatus and the extracted transmit power information for base station apparatus is output to SIR estimation section 1205. The transmit power information is the same as that explained in Embodiment 1.

SIR estimation section 1205 estimates the reception quality of the DSCH signal for each base station apparatus using the reception quality of the CPICH signal for each base station apparatus from measuring section 1202 and transmit power information for each base station apparatus from BCH demodulation section 1204. The reception quality of the DSCH signal estimated for base station apparatus is output to base station apparatus 1206 and MCS1 decision section 1207.

Base station selection section 1206 selects a base station apparatus corresponding to the DSCH signal with optimal estimated reception quality as the request destination of the DSCH signal using the reception quality of the DSCH signal for each estimated base station apparatus. Furthermore, base station selection information to notify the request destination of the DSCH signal is generated based on the selection result. After this, the selection result is output to MCS1 decision section 1207 and the generated base station selection information is output to multiplexing section 1208.

MSC1 decision section 1207 extracts the reception quality of the DSCH signal for the base station apparatus selected as the request destination of the DSCH signal based on the reception quality of the DSCH signal for each base station apparatus estimated by SIR estimation section 1205 and the selection result from base station selection section 1206 first. Furthermore, the modulation/coding system applicable to the DSCH signal is decided using the extracted reception quality and MCS1 to notify the decided modulation/coding system is generated. The creation of MCS1 is the same as that by MCS1 decision section 308 in Embodiment 1, and therefore detailed explanations thereof are omitted. MCS1 generated is output to multiplexing section 1208.

Multiplexing section 1208 creates a multiplexed signal by multiplexing a known signal, transmission data and MCS1 from MCS1 decision section 1207 and the base station selection information from base station decision section 1206. That is, for example, as shown in FIG.16, a known signal is inserted into the PILOT section, MCS1 is inserted into the MCS1 section, the base station selection information is inserted into the BS number section and transmission data is inserted into the DATA section and thereby a multiplexed signal is generated. The multiplexed signal generated is sent via DPCH modulation/spreading section 310, RF section 302 and antenna 301 as explained in Embodiment 1.

Thus, the signals sent from communication terminal apparatuses 1 to N are received by the base station apparatus. At the base station apparatus, the signals sent to communication terminal apparatuses 1 to N as shown above are output to DPCH despreading/demodulation sections 1301-1 to 1301-N via antenna 201 and RF section 202.

DPCH despreading/demodulation sections 1301-1 to 1301-N generate demodulated signals by carrying out the same processing as that by DPCH despreading/demodulation sections 203-1 to 203-N of Embodiment 1 (FIG.4) first. Furthermore, DPCH despreading/demodulation sections 1301-1 to 1301-N extracts MCS1 and base station selection information from the demodulated signal. MCS1 and base station selection information extracted from DPCH despreading/demodulation sections 1301-1 to 1301-N are output to decision sections 1302-1 to 1302-N.

Decision sections 1302-1 to 1302-N decide whether the base station selection information from DPCH despreading/demodulation sections 1301-1 to 1301-N indicate that the own station is requested to send the DSCH signal or not. Of decision sections 1302-1 to 1302-N, the decision section that has obtained the base station selection information indicating that the own station is requested to send the DSCH signal outputs its own MCS1 to allocation section 204.

Allocation section 204 selects a communication terminal apparatus capable of sending a DSCH signal at the highest speed from among communication terminal apparatuses 1 to N by applying the same processing as that explained in Embodiment 1. Hereafter, multiplexing section 210 generates a multiplexed signal and the multiplexed signal generated is sent to the communication terminal apparatus via RF section 202 and antenna 201 in the same way as Embodiment 1.

Then, the effects of the base station apparatus and communication terminal apparatus of this embodiment will be explained using specific examples below. Suppose the transmit power of the DSCH signal at base station apparatus A and the transmit power of the CPICH signal are the same and the transmit power of the DSCH signal at base station apparatus B is lower than the transmit power of the CPICH signal by 10 [dB] and the communication terminal apparatus receives CPICH signals of the same reception quality from base station apparatus A and base station apparatus B.

In this case, the reception quality of the DSCH signal sent from base station apparatus A is estimated as 50+0=50 [dB] and the reception quality of the DSCH signal sent from base station apparatus B is estimated as 50-10=40 [dB]. As a result, the communication terminal apparatus selects base station apparatus A as the request destination of the DSCH signal.

Therefore, even if the reception quality of the CPICH signal is the same, the communication terminal apparatus can select a base station apparatus that sends a DSCH signal with better reception quality as the request destination of the DSCH signal.

Thus, each base station apparatus of this embodiment notifies the transmit power information on the transmit power of the DSCH signal and CPICH signal to the communication terminal apparatus and the communication terminal apparatus estimates the reception quality of the DSCH signal sent from each base station apparatus using the CPICH signal and the transmit power information sent from each base station apparatus. Furthermore, the communication terminal apparatus selects the base station apparatus corresponding to the DSCH signal with the optimal estimated reception quality from among all the base station apparatuses as the request destination of the DSCH signal. Thus, the communication terminal apparatus can accurately estimate the reception quality of the DSCH signal sent from each base station apparatus and can thereby accurately select the base station apparatus capable of receiving the DSCH signal with optimal quality as the request destination of the DSCH signal.

Furthermore, the communication terminal apparatus decides the modulation/coding system applicable to this DSCH signal based on the estimated reception quality of the DSCH signal corresponding to the selected base station apparatus. Thus, the communication terminal apparatus can accurately decide the modulation/coding system applicable to the DSCH signal to be sent by the selected base station apparatus.

Therefore, it is possible to provide a base station apparatus capable of sending a DSCH signal to be received with optimal quality by a communication terminal apparatus and at the same time provide a communication terminal apparatus capable of receiving the DSCH signal with optimal quality.

(Embodiment 4)

This embodiment will describe a case where the communication terminal apparatus decides the base station apparatus which becomes the request destination of a DSCH signal and the base station apparatus decides the modulation/coding system. First, an outline of the present invention will be explained with reference to FIG.13.

In FIG.13, base station apparatus 1101 and base station apparatus 1102 each send their specific BCH signals. Furthermore, base station apparatus 1101 and base station apparatus 1102 each send their specific CPICH signals. Suppose the BCH signal and CPICH signals here are the same as those in Embodiment 1.

Communication terminal apparatus 1103 estimates the reception quality of the DSCH signal sent from base station apparatus 1101 using the reception quality of the CPICH signal sent from base station apparatus 1101 and the transmit power information included in the BCH signal sent from base station apparatus 1101. Furthermore, communication terminal apparatus 1103 estimates the reception quality of the DSCH signal sent from base station apparatus 1102 using the reception quality of the CPICH signal sent from base station apparatus 1102 and the transmit power information included in the BCH signal sent from base station apparatus 1102.

Furthermore, communication terminal apparatus 1103 selects a base station apparatus corresponding to the DSCH signal with the optimal estimated reception quality (here, suppose base station apparatus 1101) as the request destination of the DSCH signal and notifies base station apparatus 1101 of the estimated reception quality of the DSCH signal.

Selected base station apparatus 1101 selects a communication terminal apparatus (here suppose communication terminal apparatus 1103) having a good downlink (that is, DSCH) situation and good downlink service request (short delay time) from among all the reception quality based on the reception quality of the

DSCH signal notified from the communication terminal apparatus.

After this, base station apparatus 1101 decides the modulation/coding system applicable to the DSCH signal based on the reception quality of the CPICH signal at selected communication terminal apparatus 1103. Furthermore, base station apparatus 1101 sends a DSCH signal to selected communication terminal apparatus 1002 using the decided modulation/coding system. This is an outline of this embodiment.

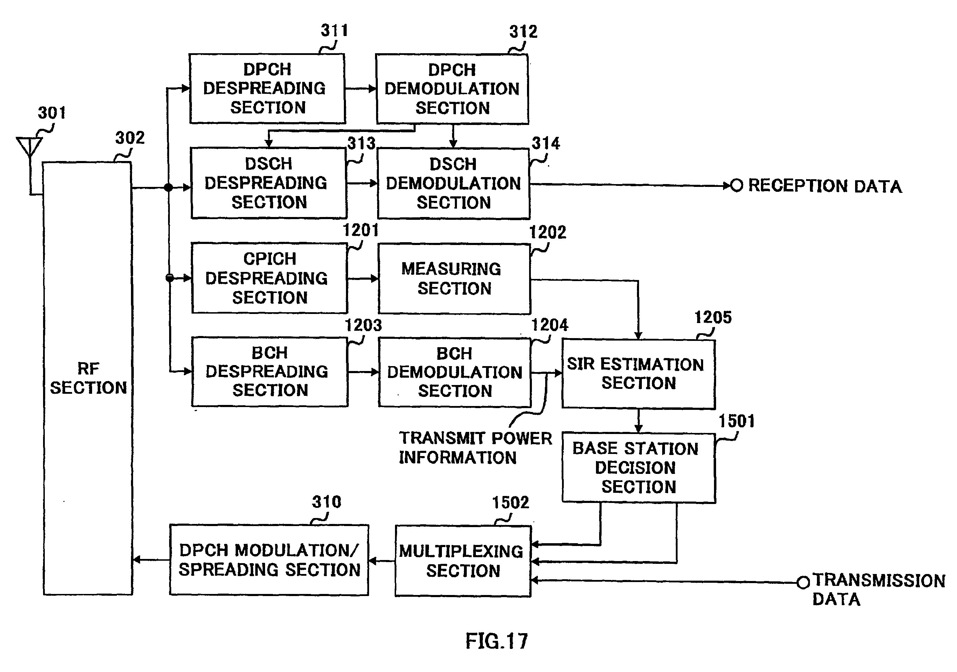

Then, configurations of the above-described base station apparatus and communication terminal apparatus will be explained. First, a configuration of the communication terminal apparatus of this embodiment will be explained with reference to FIG.17. FIG.17 is a block diagram showing a configuration of the communication terminal apparatus according to Embodiment 4 of the present invention. The same components in FIG. 17 as those in Embodiment 3 (FIG.14) are assigned the same reference numerals as those in FIG.14 and detailed explanations thereof are omitted.

In FIG.17, base station decision section 1501 selects a base station apparatus corresponding to the DSCH signal with the optimal estimated reception quality as the request destination of the DSCH signal using the reception quality of the DSCH signal for each base station apparatus estimated by SIR estimation section 1205. Furthermore, base station decision section 1501 generates base station selection information to notify the request destination of the DSCH signal and outputs this base station selection information and information indicating the estimated reception quality of the DSCH signal sent by the selected base station apparatus to multiplexing section 1502.

Multiplexing section 1502 generates a multiplexed signal by multiplexing a known signal, transmission data, information indicating the estimated reception quality of the DSCH signal from base station decision section 1501 and base station selection information.

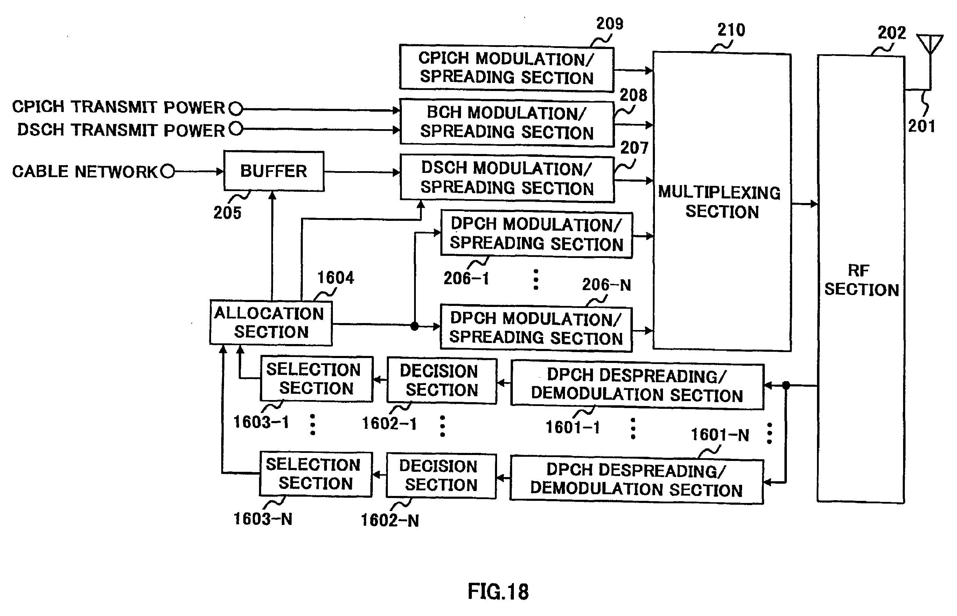

Then, a configuration of the base station apparatus according to this embodiment will be explained with reference to FIG.18. FIG.18 is a block diagram showing a configuration of the base station apparatus according to Embodiment 4 of the present invention. The same components in FIG.18 as those in Embodiment 3 (FIG.15) are assigned the same reference numerals as those in FIG.15 and detailed explanations thereof are omitted.

In FIG.18, DPCH despreading/demodulation sections 1601-1 to 1601-N have the same configurations as DPCH despreading/demodulation sections 1301-1 to 1301-N in Embodiment 3 except that DPCH despreading/demodulation sections 1601-1 to 1601-N extract base station selection information and information indicating the reception quality of the DSCH signal and output to decision sections 1602-1 to 1602-N.

When the base station selection information from DPCH despreading/demodulation sections 1601-1 to 1601-N indicates that the own station is requested to transmit a DSCH signal, decision sections 1602-1 to 1602-N output the information indicating the reception quality of the DSCH from DPCH despreading/demodulation sections 1601-1 to 1601-N to selection sections 1603-1 to 1603-N.

Selection sections 1603-1 to 1603-N decide the modulation/coding system applicable to the DSCH signal to communication terminal apparatuses 1 to N using the information indicating the reception quality of the DSCH signal from DPCH despreading/demodulation sections 1601-1 to 1601-N and output the decision result to allocation section 1604.

Allocation section 1604 has the same configuration as that of allocation section 204 in Embodiment 1 except that allocation section 1604 selects a communication terminal apparatus capable of sending a DSCH signal at the highest speed from among communication terminal apparatuses 1 to N using the decision result of selection sections 1603-1 to 1603-N.

Then, operations of the base station apparatus and communication terminal apparatus in the above-described configurations will be explained with reference to FIG. 19 in addition of FIG.17 to FIG.18. FIG.19 is a schematic view showing an example of a DPCH frame format used in the communication terminal apparatus according to Embodiment 4 of the present invention. Detailed explanations of the same operation in this embodiment as those of Embodiment 1 are omitted.

Base station decision section 1501 of communication terminals 1 to N selects a base station apparatus corresponding to the DSCH signal with the optimal estimated reception quality as the request destination of the DSCH signal using the reception quality of the DSCH signal for each base station apparatus estimated by SIR estimation section 1205. Furthermore, base station decision section 1501 generates base station selection information to notify the request destination of the DSCH signal and outputs this base station selection information and information indicating the estimated reception quality of the DSCH signal sent from the selected base station apparatus to multiplexing section 1502.

Multiplexing section 1502 multiplexes a known signal, transmission data, information indicating the reception quality of the DSCH signal and base station selection information to generate a multiplexed signal. That is, as shown in FIG.19, for example, a known signal is inserted into the PILOT section, the reception quality of the DSCH signal is inserted into the SIR section, base station selection information is inserted into the BS number section and transmission data is inserted into the DATA section and a multiplexed signal is generated in this way. Hereafter, DPCH modulation/spreading section 301 generates a DPCH signal as described above and then the generated DPCH signal is sent to the base station apparatus via RF section 302 and antenna 301.

Thus, signals sent from communication terminal apparatuses 1 to N are received by the base station apparatus. The signals sent to communication terminal apparatuses 1 to N are output to DPCH despreading/ demodulation sections 1601-1 to 1601-N via antenna 201 and RF section 202.

DPCH despreading/demodulation sections 1601-1 to 1601-N each extract the base station selection information and information indicating the reception quality of the DSCH signal from the demodulated signals. The base station selection information and information indicating the reception quality of the DSCH signal extracted by DPCH despreading/demodulation sections 1601-1 to 1601-N are each output to decision sections 1602-1 to 1602-N.

Decision sections 1602-1 to 1602-N decide whether the base station selection information from DPCH despreading/demodulation sections 1601-1 to 1601-N indicate that the own station is requested to send a DSCH signal or not. From among decision sections 1602-1 to 1602-N, the decision section that has obtained the base station selection information indicating that the own station is requested to send a DSCH signal outputs the information indicating the reception quality of the DSCH of the own decision section to the selection section provided in the posterior stage.

The selection section to which the decision section in the first stage of selection sections 1603-1 to 1603-N outputs the received signal of the DSCH signal decides the modulation/coding system applicable to the DSCH signal based on the reception quality of the DSCH signal. By the way, the method of deciding the modulation/coding system is similar to that of MCS1 decision section 308 in Embodiment 1 (FIG.5), and therefore detailed explanations thereof are omitted. The decision results in selection sections 1603-1 to 1603-N are output to allocation section 1604.

Allocation section 1604 selects a communication terminal apparatus capable of sending the DSCH signal at the highest speed from among communication terminal apparatuses 1 to N using the modulation/coding systems corresponding to communication terminal apparatuses 1 to N from respective selection sections 1603-1 to 1603-N. After this, as explained in Embodiment 1, multiplexing section 210 generates a multiplexed signal. The multiplexed signal generated is sent to the communication terminal apparatus via RF section 202 and antenna 201.

Thus, each base station apparatus of this embodiment notifies information on the CPICH signal, DSCH signal and the transmit power of the CPICH signal to the communication terminal apparatus and the communication terminal apparatus estimates the reception quality of the DSCH signal sent by each base station apparatus using the CPICH signal and transmit power sent from each base station apparatus. Furthermore, the communication terminal apparatus selects the base station apparatus corresponding to the DSCH signal with the optimal estimated reception quality from among all the base station apparatuses as the request destination of the DSCH signal. This allows the communication terminal apparatus to accurately estimate the reception quality of the DSCH signal sent from each base station apparatus, and can thereby accurately select the base station apparatus that sends a DSCH signal which can be received with optimal quality as the request destination of the DSCH signal.

Furthermore, the communication terminal apparatus notifies the estimated reception quality of the DSCH signal sent from this base station apparatus to the selected base station apparatus. This allows the base station apparatus to accurately decide the modulation/coding system applicable to the DSCH signal to be sent to the communication terminal apparatus.

Thus, this embodiment can not only provide a base station apparatus capable of sending a DSCH signal to be received with optimal quality by a communication terminal apparatus but also provide a communication terminal apparatus capable of receiving the DSCH signal with optimal quality.

Foregoing Embodiments 1 to 4 have described cases where the reception quality of the DSCH signal on the receiving side is estimated using the DSCH signal and transmit power of the CPICH signal on the transmitting side and the reception quality of the CPICH signal on the receiving side and the modulation/coding system applicable to the DSCH signal on the transmitting side is decided based on the estimated reception quality of the DSCH signal. However, the present invention is also applicable to cases where the name of the data channel ("DSCH" in the foregoing embodiments), control channel ("CPICH" in the foregoing embodiments) used to estimate the data channel and type of information communicated through these channels, etc. are changed as appropriate as far as the following conditions are met. That is, the data channel and control channel need to be time-multiplexed or code-multiplexed.

Furthermore, foregoing Embodiments 1 to 4 have described cases where the transmitting side uses BCH as the notification channel to notify the transmit power of the data channel and control channel on the transmitting side to the receiving side, but it is also possible to use other channels such as channel DPCH, etc. to be multiplexed with the data channel and control channel (time-multiplexing or code-multiplexing) as the notification channels.

Furthermore, foregoing Embodiments 3 and 4 have described cases where the communication terminal apparatus is located in areas covered by two base station apparatuses, but the present invention is also applicable to a case where the communication terminal apparatus is located in an area covered by one base station apparatus or areas covered by three or more base station apparatuses.

As is clear from the above explanations, the present invention can provide a communication terminal apparatus capable of receiving a DSCH signal with optimal quality or provide a base station apparatus capable of sending a DSCH signal which can be received with optimal quality by the communication terminal apparatus.

This application is based on the Japanese Patent Application No.2000-201665 filed on July 3, 2000, entire content of which is expressly incorporated by reference herein.

Industrial Applicability

The present invention is ideally applicable to a radio communication apparatus, and more particularly, to the field of a base station apparatus and communication terminal apparatus used in a W-CDMA (Wide band Code Division Multiple Access)-based digital mobile unit communication system.

**Claims**

1. A base station apparatus comprising:

   receiving means for receiving the reception quality of a control channel signal measured at a communication terminal apparatus; estimating means for estimating the reception quality of a data channel signal based on the reception quality of said control channel signal and transmit power values of the control channel and the data channel signal; and transmitting means for transmitting the data channel signal according to a modulation system and coding system decided using the reception quality of the estimated data channel signal.

2. A communication terminal apparatus comprising:

   measuring means for measuring the reception quality of a control channel signal sent from a base station apparatus; and transmitting means for transmitting the reception quality of said control channel signal, wherein said base station apparatus estimates the reception quality of the data channel signal based on the reception quality of said control channel signal and the transmit power values of the control channel signal and data channel signal at the base station apparatus and transmits the data channel signal according to the modulation system and coding system decided using the reception quality of said data channel signal.

3. The communication terminal apparatus according to claim 2, further comprising receiving means for receiving a data channel signal sent from the base station apparatus.

4. A communication terminal apparatus comprising:

   measuring means for measuring reception quality of a control channel signal sent from a base station apparatus; estimating means for estimating the reception quality of the data channel signal based on the reception quality of said control channel signal and transmit power value information of the control channel signal and data channel signal sent from the base station apparatus; and transmitting means for transmitting the reception quality of the estimated data channel signal to said base station apparatus, wherein said base station apparatus transmits a data channel signal according to the modulation system and coding system decided using the reception quality of said data channel signal.

5. The communication terminal apparatus according to claim 4, further comprising receiving means for receiving a data channel signal sent from the base station apparatus.

6. A communication terminal apparatus comprising:

   measuring means for measuring the reception quality of a control channel signal sent from a base station apparatus; estimating means for estimating the reception quality of the data channel signal based on the transmit power value information of the control channel signal and data channel signal sent from the base station apparatus; and selecting means for selecting a target base station apparatus with good estimated reception quality of the data channel signal from among all the base station apparatuses as the request destination of the data channel signal; and transmitting means for transmitting the estimated reception quality of the data channel signal to said target base station apparatus, wherein said base station apparatus transmits the data channel signal according to the modulation system and coding system decided using the reception quality of said data channel signal.

7. The communication terminal apparatus according to claim 6, further comprising receiving means for receiving a data channel signal sent from the target base station apparatus.

8. A base station apparatus comprising:

   receiving means for receiving the reception quality of a data channel signal estimated by a communication terminal apparatus; and transmitting means for transmitting the data channel signal according to a modulation system and coding system decided using the reception quality of said data channel signal, wherein said communication terminal apparatus estimates the reception quality of the data channel signal based on the reception quality of the control channel signal and transmit power value information of the control channel signal and data channel signal sent from the base station apparatus.

9. A communication terminal apparatus comprising:

measuring means for measuring the reception quality of a control channel signal sent from a base station apparatus;
estimating means for estimating the reception quality of the data channel signal based on the reception quality of said control channel signal and transmit power value information of the control channel signal and data channel signal sent from the base station apparatus; and
transmitting means for transmitting the modulation system and coding system used for the data channel signal decided using the reception quality of the estimated data channel signal to said base station apparatus.

10. The communication terminal apparatus comprising according to claim 9, further comprising receiving means for receiving a data channel signal sent from the base station apparatus.

11. A communication terminal apparatus comprising:

measuring means for measuring the reception quality of a control channel signal sent from a base station apparatus;
estimating means for estimating the reception quality of the data channel signal based on the reception quality of said control channel signal and transmit power value information of the control channel signal and data channel signal sent from the base station apparatus;
selecting means for selecting a target base station apparatus with optimal estimated reception quality of the data channel signal from among all the base station apparatuses; and
transmitting means for transmitting the modulation system and coding system used for the data channel signal decided using the reception quality of the estimated data channel signal of said target base station apparatus to said target base station apparatus.

12. The communication terminal apparatus according to claim 6 comprising, further comprising receiving means for receiving the data channel signal sent from the base station apparatus.

13. A base station apparatus comprising:

receiving means for receiving a modulation system and coding system sent from a communication terminal apparatus; and
transmitting means for transmitting a data channel signal according to said modulation system and coding system, wherein said communication terminal apparatus estimates the reception quality of the data channel signal based on the reception quality of a control channel signal and transmit power value information of the control channel signal and data channel signal sent from the base station apparatus and decides the modulation system and coding system to be used for the data channel signal using the reception quality of said data channel signal.

14. A communication method comprising:

a receiving step of receiving the reception quality of a control channel signal measured at a communication terminal apparatus;
an estimating step of estimating the reception quality of a data channel signal based on the reception quality of said control channel signal and transmit power values of the control channel signal and the data channel signal at the base station; and
a transmitting step of transmitting the data channel signal according to a modulation system and coding system decided using the reception quality of the estimated data channel signal at the base station apparatus.

15. A communication method comprising:

a receiving step of receiving the reception quality of a control channel signal measured at a communication terminal apparatus;
an estimating step of estimating the reception quality of a data channel signal based on the reception quality of said control channel signal and transmit power values of the control channel signal and the data channel signal at the base station apparatus; and
a transmitting step of transmitting the data channel signal according to a modulation system and coding system decided using the reception quality of the data channel signal estimated at the base station apparatus.

16. A communication method comprising:

a receiving step of receiving the reception quality of a control channel signal measured at a communication terminal apparatus;

an estimating step of estimating the reception quality of a data channel signal based on the reception quality of said control channel signal and transmit power values of the control channel signal and the data channel signal at the base station apparatus;

a deciding step of deciding a modulation system and coding system to be used for a data channel signal using the reception quality of the data channel signal estimated at the communication terminal apparatus; and

a transmitting step of transmitting the data channel signal according to said modulation system and coding system at the base station apparatus.

FIG.1

FIG.2

FIG.3

**FIG.4**

EP 1 207 714 A1

FIG.5

EP 1 207 714 A1

TRANSMIT
POWER
INFORMATION

| BCH | PILOT | |
|-----|-------|---|

| CPICH | PILOT |
|-------|-------|

| DPCH | PILOT | MCS2 | DATA |
|------|-------|------|------|

| DSCH | DATA |
|------|------|

FIG.6

| DPCH | PILOT | MCS1 | DATA |
|------|-------|------|------|

FIG.7

24

EP 1 207 714 A1

CPICH
TRANSMIT POWER O

DSCH
TRANSMIT POWER O

CABLE NETWORK O

209
CPICH MODULATION/
SPREADING SECTION

205
BUFFER

207
DSCH MODULATION/
SPREADING SECTION

DPCH MODULATION/
SPREADING SECTION

206-1  :  206-N

603
ALLOCATION
SECTION

DPCH MODULATION/
SPREADING SECTION

604
MULTIPLEXING
SECTION

202
RF
SECTION

201

SELECTION
SECTION

601-1
DPCH DESPREADING/
DEMODULATION SECTION

602-1  :

SELECTION
SECTION

601-N
DPCH DESPREADING/
DEMODULATION SECTION

602-N

FIG.8

FIG.9

EP 1 207 714 A1

CPICH | PILOT

DPCH | PILOT | MCS2 | DATA

DSCH | DATA

**FIG.10**

DPCH | PILOT | SIR | DATA

**FIG.11**

FIG.12

FIG.13

FIG.14

CPICH TRANSMIT POWER

DSCH TRANSMIT POWER

CABLE NETWORK

BUFFER 205

204 ALLOCATION SECTION

CPICH MODULATION/ SPREADING SECTION 209

BCH MODULATION/ SPREADING SECTION 208

DSCH MODULATION/ SPREADING SECTION 207

DPCH MODULATION/ SPREADING SECTION 206-1

DPCH MODULATION/ SPREADING SECTION 206-N

DPCH DESPREADING/ DEMODULATION SECTION 1301-1

DPCH DESPREADING/ DEMODULATION SECTION 1301-N

DECISION SECTION 1302-1

DECISION SECTION 1302-N

MULTIPLEXING SECTION 210

RF SECTION 202

201

FIG.15

30

DPCH

| PILOT | MCS1 | BS<br>NUMBER | DATA |
|-------|------|--------------|------|

FIG.16

FIG.17

- 301 (antenna)
- 302 RF SECTION
- 311 DPCH DESPREADING SECTION
- 312 DPCH DEMODULATION SECTION
- 313 DSCH DESPREADING SECTION
- 314 DSCH DEMODULATION SECTION
- 1201 CPICH DESPREADING SECTION
- 1202 MEASURING SECTION
- 1203 BCH DESPREADING SECTION
- 1204 BCH DEMODULATION SECTION
- 1205 SIR ESTIMATION SECTION
- 1501 BASE STATION DECISION SECTION
- 1502 MULTIPLEXING SECTION
- 310 DPCH MODULATION/SPREADING SECTION

RECEPTION DATA

TRANSMISSION DATA

TRANSMIT POWER INFORMATION

FIG.18

DPCH

| PILOT | SIR | BS NUMBER | DATA |
|-------|-----|-----------|------|

FIG.19

## INTERNATIONAL SEARCH REPORT

| International application No. |
| --- |
| PCT/JP01/05695 |

| A. CLASSIFICATION OF SUBJECT MATTER |
| --- |
| Int.Cl$^7$  H04Q7/38 |

According to International Patent Classification (IPC) or to both national classification and IPC

| B.  FIELDS SEARCHED |
| --- |
| Minimum documentation searched (classification system followed by classification symbols)<br>    Int.Cl$^7$  H04B7/24-7/26, H04Q7/00-7/38 |

Documentation searched other than minimum documentation to the extent that such documents are included in the fields searched
| Jitsuyo Shinan Koho | 1922-1996 | Toroku Jitsuyo Shinan Koho | 1994-2001 |
| --- | --- | --- | --- |
| Kokai Jitsuyo Shinan Koho | 1971-2001 | Jitsuyo Shinan Toroku Koho | 1996-2001 |

Electronic data base consulted during the international search (name of data base and, where practicable, search terms used)

| C.  DOCUMENTS CONSIDERED TO BE RELEVANT |
| --- |

| Category* | Citation of document, with indication, where appropriate, of the relevant passages | Relevant to claim No. |
| --- | --- | --- |
| A | WO 99/12302 A1 (Telefonaktiebolaget LM Ericsson),<br>11 March, 1999 (11.03.99),<br>& AU 8754198 A        & EP 1010286 A1<br>& BR 9811395 A        & US 6134230 A | 1-16 |
| A | JP 11-252002 A (NEC Corporation),<br>17 September, 1999 (17.09.99),<br>& EP 0940937 A2        & CA 2263187 A<br>& CN 1236238 A        & KR 99077589 A | 1-16 |
| A | JP 2000-102057 A (Toshiba Corporation),<br>07 April, 2000 (07.04.00),<br>& WO 00/05910 A1        & GB 2346295 A<br>& CN 1275294 A        & JP 2000-224646 A | 1-16 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 September, 2001 (19.09.01) | Date of mailing of the international search report<br>    02 October, 2001 (02.10.01) |
| --- | --- |
| Name and mailing address of the ISA/<br>    Japanese Patent Office | Authorized officer |
| Facsimile No. | Telephone No. |

Form PCT/ISA/210 (second sheet) (July 1992)